# EUROPÄISCHE PATENTSCHRIFT

(11) **EP 2 549 563 B1**
(45) Veröffentlichungstag und Bekanntmachung des Hinweises auf die Patenterteilung: **10.12.2014**
(21) Anmeldenummer: 12190153.2
(22) Anmeldetag: 26.10.2012
(51) Int. Cl.: H01M 2/02, H01M 2/10

(54) **System aus einem Batterietrog und einer Trogaufnahme für die Montage des Batterietrogs in einer Batteriebox einer Windenergieanlage**
System comprising a battery tray and a tray receiver for mounting the battey tray in a battery cabinet of a wind turbine
Système composé d'une cuve de batterie et d'un logement de cuve pour le montage de la cuve de batterie dans un compartiment de batterie d'une éolienne

(43) Veröffentlichungstag der Anmeldung: 23.01.2013
(73) Patentinhaber: Moog Unna GmbH, 59423 Unna (DE)
(72) Erfinder: Springauf, Michael, 33165 Lichtenau (DE); Franzak, Bernd, 44534 Lünen (DE)
(74) Vertreter: Jostarndt, Hans-Dieter

(56) Entgegenhaltungen:
- DE-A1-102007 007 956
- US-A- 2 947 373
- US-A1- 2009 325 049

## Beschreibung

Die Erfindung betrifft ein System aus mindestens einem Batterietrog und mindestens einer Trogaufnahme, insbesondere für die Montage des mindestens einen Batterietrogs in einer Batteriebox einer Windenergieanlage, wobei die Trogaufnahme eine Auflageseite aufweist, über welche der Batterietrog auf der Trogaufnahme aufsetzbar ist.

Für die Betriebssicherheit von Windenergieanlagen ist es unerlässlich, dass das Pitchsystem der Windenergieanlage auch bei Netzausfall weiter betrieben werden kann, um etwa bei einem aufkommenden Unwetter die Flügel der Windenergieanlage aus dem Wind zu drehen. Um dies zu ermöglichen, weisen gattungsgemäße Windenergieanlagen je Flügel eine gesonderte Batteriebox mit einer oder mehreren darin aufgenommenen Batterien auf. Die Batterieboxen sind jeweils einem bestimmten Flügel zugeordnet und an der Nabe der Windenergieanlage derart angeordnet, dass sie sich im Betrieb der Windenergieanlage mitdrehen.

Die Batterien müssen entsprechend vorgegebener Serviceintervalle regelmäßig ausgetauscht werden. Um ein Austauschen der Batterien zu ermöglichen, sind diese in Batterietrögen aufgenommen, wobei die Batterietröge üblicherweise über Halfenschienen im Innern der Batteriebox mit dieser verbunden sind. Die Batterietröge sind mit den Halfenschienen unter Verwendung von Edelstahlschrauben verschraubt. Im Servicefall müssen die Batterietröge für den Austausch der Batterien zunächst in eine rutschfeste, positionssichere Stellung gebracht werden. Dazu ist es erforderlich, dass die Windenergieanlage in Bezug auf jede einzelne Batteriebox horizontal ausgerichtet und verbolzt wird, wobei bereits dieser Vorgang für jeden Flügel separat durchgeführt werden muss und dementsprechend zeitintensiv ist. Nach dem Ausrichten der Windenergieanlage kann das Servicepersonal die Nabe der Windenergieanlage betreten, wobei es zum Ausrichten des nächsten Flügels die Nabe der Windenergieanlage mitsamt dem umfangreichen Werkzeug wieder verlassen muss. Grundsätzlich ist es bei Windenergieanlagen für die Erzielung hoher Effizienzen erforderlich, dass die Stillstandszeiten der Anlage so gering wie möglich gehalten werden.

US 2009/0325049 A1 offenbart ein Montagesystem für eine Vielzahl an Batteriemodulen zur Bildung eines Batteriebündels einschließlich eines Batterietrogs mit einer Kombination aus fixierten und abnehmbaren Halterungen, die das Einfügen oder Herausnehmen individueller Batteriemodule von dem Batteriebündel ermöglichen, und zwar beides während der Anordnung als Batteriebündel auch als Service während des Betriebs. Der Batterietrog kann dabei auf einer Bodenplatte für zusätzliche Unterstützung oder integriert als mehrere Batterietröge mit zugehörigen Batteriemodulen in dem Batteriebündel angeordnet sein. Eine Abdeckung kann für zusätzliche Unterstützung und Schutz der Batteriemodule hinzugefügt werden. Falls mehrere Batterietröge auf der Bodenplatte integriert sind, können diese auf der Bodenplatte in unterschiedlichen Richtungen angeordnet sein.

Darüber hinaus weisen die für die Verschraubung der Batterietröge in den Batterieboxen verwendeten Edelstahlschrauben aufgrund der hohen Anzugsdrehmomente einen hohen Verschleiß auf, so dass auch diese regelmäßig überprüft und gegebenenfalls ausgetauscht werden müssen. Der gesamte Servicevorgang für den Austausch der Batterien ist bei den bekannten Systemen somit sehr zeit- und arbeitsintensiv.

Es ist daher die Aufgabe der Erfindung, ein gattungsgemäßes System aus mindestens einem Batterietrog und mindestens einer Trogaufnahme bereitzustellen, das einen möglichst einfachen Austausch des Batterietrogs ermöglicht.

Diese Aufgabe wird erfindungsgemäß durch ein System mit den Merkmalen des Anspruchs 1 gelöst. Die abhängigen Ansprüche 2 bis 12 betreffen jeweils vorteilhafte Ausführungsformen der Erfindung.

Das erfindungsgemäße System zeichnet sich dadurch aus, dass die Trogaufnahme eine Formschlussaufnahme aufweist, wobei der Batterietrog in einer Montageposition auf der Auflageseite aufgesetzt ist, wenn er über eine erste Seite formschlüssig in der Formschlussaufnahme aufgenommen ist, wobei die Trogaufnahme beabstandet von der Formschlussaufnahme ein Befestigungsmittel für eine Verbindung einer zweiten Seite des Batterietrogs mit der Trogaufnahme aufweist, und wobei die zweite Seite des Batterietrogs in Bezug auf das Befestigungsmittel vorausgerichtet ist, wenn sich der Batterietrog in der Montageposition befindet, wobei das Befestigungsmittel einen Ausschnitt in einem Flansch des Batterietrogs aufweist, welcher in der Montageposition mit einem entsprechenden Ausschnitt in der Trogaufnahme fluchtet, so dass durch einfaches Einsetzen eines selbstsichernden Schlosses in die fluchtenden Ausschnitte eine form- bzw. kraftschlüssige Verbindung zwischen der Trogaufnahme und dem Batterietrog hergestellt werden kann.

Bei dem erfindungsgemäßen System wird somit der Batterietrog durch Einsetzen in die Formschlussaufnahme so weit vorpositioniert und in eine Montageposition gebracht, dass auf einfache Weise über das Befestigungsmittel eine kraftschlüssige oder eine weitere formschlüssige Verbindung zwischen Batterietrog und Trogaufnahme hergestellt werden kann. Die Formschlussaufnahme ist vorzugsweise derart ausgestaltet, dass sie bei eingesetztem Batterietrog lediglich noch eine Bewegung des Batterietrogs in einer Einschubrichtung, entlang welcher der Batterietrog in die Formschlussaufnahme eingesetzt und wieder entnommen werden kann, erlaubt, und den Batterietrog ansonsten in den übrigen Raumrichtungen festlegt. Mit Hilfe des Befestigungsmittels kann der Batterietrog dann in der Montageposition über die zweite Seite auch in der Einschubrichtung und damit insgesamt festgelegt werden.

Die zuvor beschriebenen Maßnahmen, nämlich das Einsetzen des Batterietrogs in die Formschlussaufnahme, so dass diese in die Montageposition gebracht wird, und das darauf folgende Fixieren des Batterietrogs auf der Trogaufnahme unter Verwendung des Befestigungsmittels, können durch das Servicepersonal auch unter den beengten Bedingungen in der Windenergieanlagennabe, beispielsweise auch über Kopf, erfolgen. Dadurch ist es nicht mehr notwendig, die Flügel der Windenergieanlage zwischen der Montage zweier Batterietröge neu auszurichten.

Bei einer Ausführungsform der Erfindung weist die Formschlussaufnahme einen lösbar oder fest mit der Trogaufnahme verbundenen Clip mit einem Hinterschnitt auf, wobei der Hinterschnitt beabstandet von der Auflageseite angeordnet ist, so dass zwischen dem Hinterschnitt und der Auflageseite ein Freiraum für die formschlüssige Aufnahme des Batterietrogs, insbesondere eines diesen berandenden Flansches, gebildet ist, und wobei der Freiraum in Richtung des Befestigungsmittels geöffnet ist. Der Clip kann als ein lösbar in die Trogaufnahme einsetzbares Bauteil ausgebildet sein, so dass er bei Bedarf auch leicht ohne großen Aufwand ausgetauscht werden kann.

Vorzugsweise weist der Hinterschnitt eine Vorspannung in Richtung Auflageseite auf. Dadurch wird erreicht, dass der Batterietrog in der Formschlussaufnahme bereits so weit fixiert ist, dass der Batterietrog zumindest bis zum Betätigen des Befestigungsmittels sicher in der Montageposition gehalten wird.

Um für den Austausch der Batterien ein möglichst einfaches Wiederauslösen des Batterietrogs von der Trogaufnahme zu ermöglichen, ist bei einer Ausführungsform der Erfindung vorgesehen, dass der Clip von einer elastischen Spange gebildet ist, wobei an den Hinterschnitt ein Betätigungshebel angeformt ist, so dass der Hinterschnitt entgegen der Vorspannung verstellbar ist.

Um zu gewährleisten, dass der Batterietrog beim Einsetzen in die Formschlussaufnahme möglichst exakt in die Montageposition geführt wird, und um dem Servicepersonal taktile Rückäußerung beim Einsetzen des Batterietrogs in die Formschlussaufnahme darüber zu geben, wann die Montageposition erreicht ist, weist bei einer Ausführungsform der Erfindung der Clip einen Anschlag auf, der eine Einschubbewegung des Batterietrogs begrenzt. Besonders bevorzugt ist dazu der Freiraum für die formschlüssige Aufnahme eines den Batterietrog berandenden Flansches ausgebildet, wobei der Anschlag in Einschubrichtung dem Freiraum vorgelagert ist, und wobei der Flansch eine sich in Richtung der Einschubbewegung erstreckenden Ausnehmung aufweist, in dem der Anschlag geführt ist.

Vorzugsweise erstreckt sich dabei die Ausnehmung zwischen einer äußeren Berandung des Flansches und einem Wandelement des Batterietrogs, wobei der Anschlag in der Ausnehmung formschlüssig geführt ist, so dass der Batterietrog in der Ebene der Auflageseite senkrecht zur Einschubrichtung festgelegt ist.

Nachdem der Batterietrog über seine erste Seite in die Formschlussaufnahme eingesetzt worden ist und vorzugsweise nachdem der Batterietrog über seine zweite Seite und das Befestigungsmittel mit der Trogaufnahme verbunden worden ist, kann der Batterietrog auch über die Formschlussaufnahme kraftschlüssig mit der Trogaufnahme verbunden werden. Dazu ist bei einer Ausführungsform vorgesehen, dass die Formschlussaufnahme und der Batterietrog korrespondierende Befestigungsmittel für die kraftschlüssige Verbindung des Batterietrogs mit der Trogaufnahme aufweisen, wobei die korrespondierenden Mittel fluchten, wenn sich der Batterietrog in der Montageposition befindet. Besonders bevorzugt weist die Formschlussaufnahme dazu mindestens eine Gewindeaufnahme, wie eine Schweißmutter, oder einen Gewindebolzen auf, wobei ein Flansch des Batterietrogs, über den der Batterietrog in der Formschlussaufnahme aufgenommen werden kann, mindestens einen Durchlass für einen Gewindebolzen aufweist. Um ein ungehindertes Einsetzen des Flansches in die Formschlussaufnahme zu ermöglichen, beispielsweise wenn bereits ein Gewindebolzen teilweise in die Gewindeaufnahme eingeschraubt ist, ist der mindestens eine Durchlass ein Langloch, das sich in Einschubrichtung des Batterietrogs von einer äußeren Berandung des Flansches erstreckt.

Die Trogaufnahme kann einstückig oder mehrteilig ausgebildet sein. Die Trogaufnahme kann für die Montage eines Batterietrogs oder für die Montage mehrerer Batterietröge ausgebildet sein. Die Trogaufnahme kann eine Montageschiene oder eine Montageplatte sein, die mit der Batteriebox lösbar verbunden, beispielsweise verschraubt, unlösbar verbunden, oder einstückig mit dieser ausgebildet ist. Bei einer Ausführungsform ist die Trogaufnahme einstückig ausgebildet und weist ein erstes Ende auf, an dem die Formschlussaufnahme angeordnet ist. Des Weiteren weist sei ein dem ersten Ende gegenüber liegendes zweites Ende auf, an dem das Befestigungsmittel angeordnet ist.

Bei einer anderen Ausführungsform weist die Trogaufnahme zwei Montageschienen auf, wobei eine der Montageschienen die Formschlussaufnahme und einen ersten Abschnitt der Auflageseite aufweist, und wobei die andere der Montageschienen das Befestigungsmittel und einen zweiten Abschnitt der Auflageseite aufweist. Um eine möglichst einfache Fertigung und Montage der Trogaufnahmen zu ermöglichen, ist bei einer Ausführungsform vorgesehen, dass die Montageschienen Gleichteile sind und in abwechselnder Abfolge mindestens eine Formschlussaufnahme und mindestens ein Befestigungsmittel aufweisen.

Weitere Einzelheiten der Erfindung werden anhand der nachstehenden Figuren erläutert. Dabei zeigt:
- Figur 1: eine perspektivische Querschnittsansicht einer Batteriebox gemäß dem Stand der Technik;
- Figur 2: eine perspektivische Ansicht einer erfindungsgemäßen Trogaufnahme gemäß einer Ausführungsform;
- Figur 3: eine perspektivische Ansicht einer erfindungsgemäßen Formschlussaufnahme gemäß einer Ausführungsform;
- Figur 4: eine Querschnittsansicht der Formschlussaufnahme gemäß Figur 3;
- Figur 5: eine Detailansicht der Trogaufnahme gemäß Figur 2 mit einer eingesetzten Formschlussaufnahme gemäß den Figuren 3 und 4;
- Figur 6: eine Detailansicht gemäß Figur 5 mit teilweise in die Formschlussaufnahme eingesetztem Batterietrog; und
- Figur 7: eine Veranschaulichung der Einsetzbewegung des Batterietrogs in die Formschlussaufnahme der Trogaufnahme.

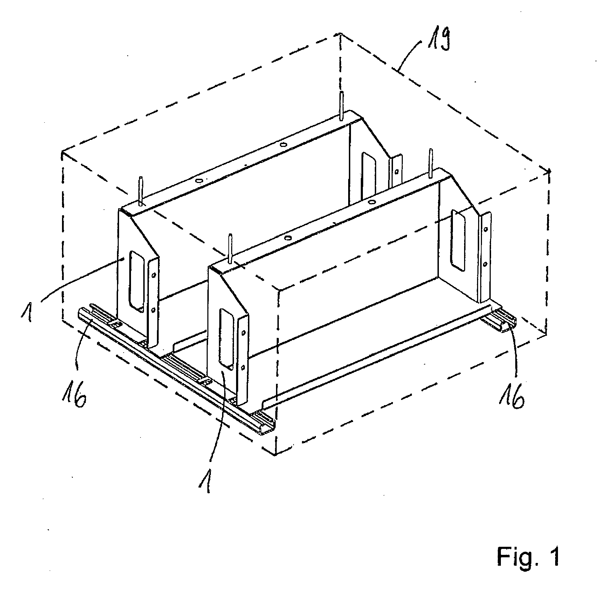

Die Figur 1 zeigt ein gattungsgemäßes System mit zwei Batterietrögen 1, die über zwei parallele Halfenschienen 16 in einer Batteriebox 19 montiert sind. Dazu sind die Batterietröge 1 über jeweils vier Schrauben mit den Halfenschienen 16 verschraubt. Da die Batterietröge 1 auf den Halfenschienen 16 vor dem Verschrauben in keiner Weise vorausgerichtet oder vorfixiert sind, muss die Batteriebox 19 für die Montage bzw. Demontage der Batterietröge 1 in eine horizontale Ausrichtung gebracht werden, so dass die Batterietröge 1 auf den Halfenschienen 16 sicher aufstehen. Aufgrund des hohen Gewichts der Batterien und aufgrund der beengten Platzverhältnisse in der Nabe der Windenergieanlage ist die Montage der Batterietröge 1 in der Batteriebox 19 bei den aus dem Stand der Technik bekannten Systemen sehr beschwerlich, wenn die Batteriebox 19 nicht wie zuvor beschrieben vorausgerichtet ist. Dies hat zur Folge, dass für jeden Flügel der Windenergieanlage die jeweilige Batteriebox 19 gesondert in die horizontale Anlage gebracht werden muss, um den Einbau bzw. den Wechsel der Batterietröge 1 zu ermöglichen.

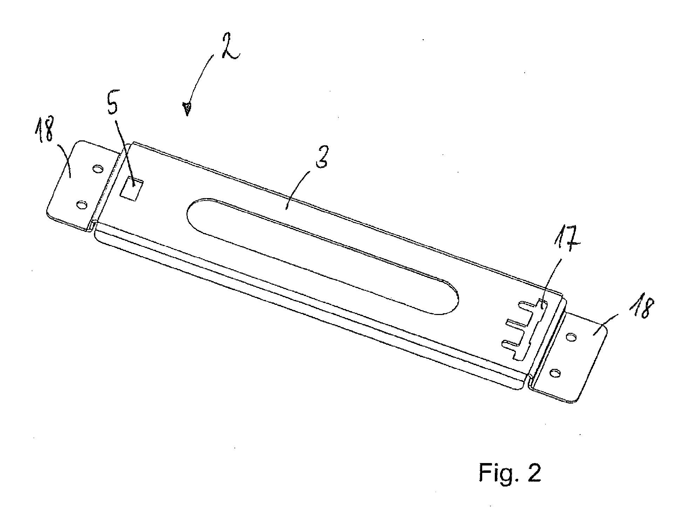

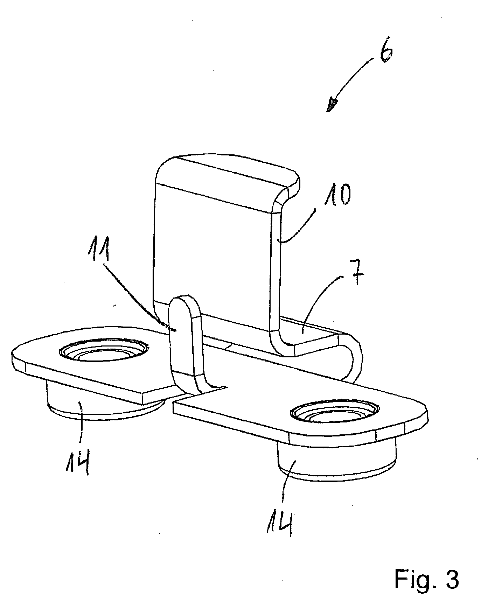

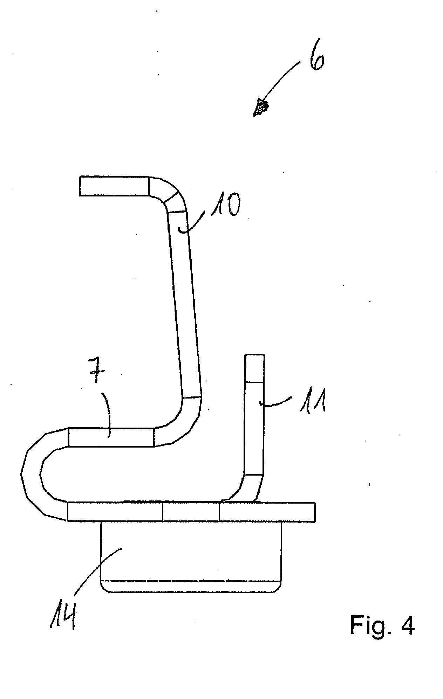

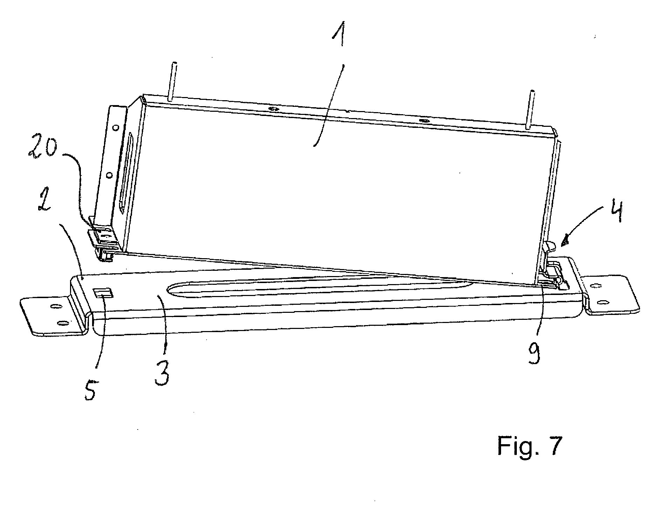

Die in Figur 2 gezeigte erfindungsgemäße Trogaufnahme 2 ist ein mehrfach abgekantetes Blechformteil, mit Montageflanschen 18, für die Befestigung der Trogaufnahme 2 beispielsweise auf dem Boden einer Batteriebox 19 gemäß Figur 1. Die Trogaufnahme 2 weist einen Ausschnitt 17 auf, welcher dazu vorgesehen ist, einen Clip 6 gemäß den Figuren 3 und 4 aufzunehmen. Der Ausschnitt 17 weist langlochartige Ausnehmungen auf, wobei die mittlere Ausnehmung dazu dient, den Anschlag 11 des Clips 6 (siehe Figur 3) zu führen, wenn der Clip 6 in die Aussparung 17 eingesetzt ist. Damit ist sichergestellt, dass die Schweißmuttern 14 des Clips 6 mit den beiden äußeren langlochartigen Ausnehmungen des Ausschnitts 17 fluchten. An ihrem gegenüberliegenden Ende weist die Trogaufnahme 2 das Befestigungsmittel 5 auf, welches in Form eines rechteckförmigen Ausschnittes ausgebildet ist. Der Ausschnitt 5 kann dazu dienen, ein selbstsicherndes Schloss 20 (siehe Figur 7) aufzunehmen.

Die Figuren 3 und 4 veranschaulichen die bevorzugte Ausführungsform des Clips 6. Der Clip 6 weist einen Hinterschnitt 7 auf, von dem ein Betätigungshebel 10 abgekantet ist. Der Clip 6 weist weiterhin zwei voneinander beanstandete Schweißmuttern 14 auf, wobei zwischen den Schweißmuttern 14 der Anschlag 11 angeordnet ist. Der Anschlag 11 erstreckt sich im Wesentlichen senkrecht zu dem Hinterschnitt 7.

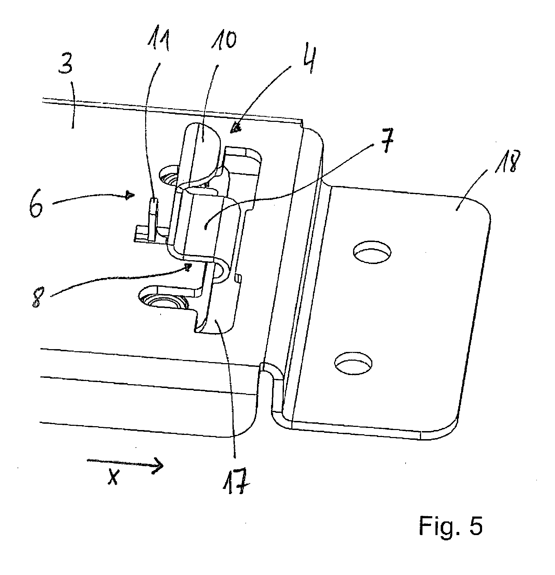

Die Figur 5 zeigt eine Detailansicht der Trogaufnahme 2 gemäß Figur 2, mit in den Ausschnitt 17 eingesetztem Clip 6. Der Hinterschnitt 7 des Clips 6 ist unter einem Abstand zu der Auflageseite 3 der Trogaufnahme 2 angeordnet, so dass zwischen dem Hinterschnitt 7 und der Auflageseite 3 ein Freiraum 8 gebildet ist. Der Anschlag 11 ist in einer langlochartigen Ausnehmung des Ausschnitts 17 der Trogaufnahme 2 geführt. Es ist weiterhin zu erkennen, dass der Anschlag 11 in Einschubrichtung x in die Formschlussaufnahme 4 dem Freiraum 8 vorgelagert ist.

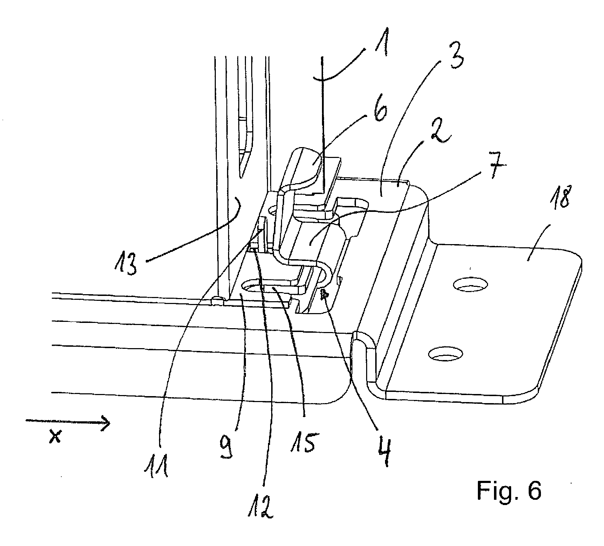

Figur 6 zeigt die Anordnung gemäß Figur 5 mit teilweise in den Freiraum 8 eingeschobenem Batterietrog 1. Erst wenn das Wandelement 13 des Batterietrogs 1 an dem Anschlag 11 des Clips 6 lagert, hat der Batterietrog 1 seine Montageposition erreicht. Der Anschlag 11 ist in der Ausnehmung 12 des Flansches 9 formschlüssig geführt, so dass dadurch das Zusammenwirken von Anschlag 11 und Ausnehmung 12 eine Vorausrichtung des Batterietrogs 1 in der Ebene der Auflageseite 3 und senkrecht zu der Einschubrichtung x vorgegeben ist. Während somit durch das Zusammenwirken von Anschlag 11 und Ausnehmung 12 die Ausrichtung des Batterietrogs 1 in der Ebene der Auflageseite 3 vorgegeben ist, ist der Flansch 9 des Batterietrogs 1 in Richtung senkrecht zu der Auflageseite 3 gerade durch den Hinterschnitt 7 fixiert. Der Flansch 9 ist daher in der Formschlussaufnahme 4 insoweit formschlüssig aufgenommen, dass er lediglich durch Verlagern des Batterietrogs antiparallel zu der Einschubrichtung x wieder aus der Formschlussaufnahme 4 entnommen werden kann.

Wie die Figuren 3 und 4 zeigen, geht der Hinterschnitt 7 über eine runde Abkantung in den Betätigungshebel 10 über, wodurch das Einfädeln des Flansches 9 in den zwischen dem Hinterschnitt 7 und der Auflageseite 3 gebildeten Freiraum 8 erleichtert wird. Dies ist in Figur 7 gezeigt. Vor dem Aufsetzen des Batterietrogs 1 auf die Trogaufnahme 2 kann ein selbstsicherndes Schloss 20 in einen dem Flansch 9 gegenüberliegenden Flansch des Batterietrogs 1 eingesetzt werden, so dass beim Erreichen der Montageposition des Batterietrogs 1 auf der Auflageseite 3 der Trogaufnahme 2 das Schloss 20 durch das als rechteckige Öffnung ausgebildete Befestigungsmittel 5 hindurch tritt und den Batterietrog 1 selbsttätig auf der Trogaufnahme 2 fixiert. Nachdem der Batterietrog 1 wie zuvor beschrieben auf der Trogaufnahme vormontiert worden ist, können durch die Durchlässe 15 des Batterietrogs 1 (siehe Figur 6) hindurch Bolzen in die Schweißmuttern 14 des Clip 6 eingedreht werden, um auch auf Seiten der Formschlussaufnahme 4 eine kraftschlüssige Verbindung zwischen dem Batterietrog 1 und der Trogaufnahme 2 herzustellen.

Die in der vorstehenden Beschreibung, in der Zeichnung sowie in den Ansprüchen offenbarten Merkmale der Erfindung können sowohl einzeln als auch in beliebiger Kombination für die Verwirklichung der Erfindung wesentlich sein.

### Bezugszeichenliste

- 1: Batterietrog
- 2: Trogaufnahme
- 3: Auflageseite
- 4: Formschlussaufnahme
- 5: Befestigungsmittel
- 6: Clip
- 7: Hinterschnitt
- 8: Freiraum
- 9: Flansch
- 10: Betätigungshebel
- 11: Anschlag
- 12: Ausnehmung
- 13: Wandelement
- 13: Schweißmutter
- 15: Durchlass
- 16: Halfenschiene
- 17: Ausschnitt
- 18: Montageflansch
- 19: Batteriebox
- 20: selbstsicherndes Schloss

## Patentansprüche

1. System aus mindestens einem Batterietrog (1) und mindestens einer Trogaufnahme (2), für die Montage des mindestens einen Batterietrogs (1) in einer Batteriebox (19), insbesondere einer Windenergieanlage, wobei die Trogaufnahme (2) eine Auflageseite (3) aufweist, über welche der Batterietrog (1) auf der Trogaufnahme (2) aufsetzbar ist, wobei die Trogaufnahme (2) eine Formschlussaufnahme (4) aufweist, wobei der Batterietrog (1) in einer Montageposition auf der Auflageseite (3) aufgesetzt ist, wenn er über eine erste Seite formschlüssig in der Formschlussaufnahme (4) aufgenommen ist, wobei die Trogaufnahme (2) beabstandet von der Formschlussaufnahme (4) ein Befestigungsmittel (5) für eine Verbindung einer zweiten Seite des Batterietrogs (1) aufweist, und wobei die zweite Seite des Batterietrogs (1) in Bezug auf das Befestigungsmittel (5) vorausgerichtet ist, wenn sich der Batterietrog (1) in der Montageposition befindet,
**dadurch gekennzeichnet,**
**dass** die Formschlussaufnahme (4) und der Batterietrog (1) korrespondierende Befestigungsmittel für eine kraftschlüssige Verbindung des Batterietrogs (1) mit der Trogaufnahme (2) aufweisen, wobei die korrespondierenden Mittel fluchten, wenn sich der Batterietrog (1) in der Montageposition befindet, wobei die Formschlussaufnahme (4) mindestens eine Gewindeaufnahme oder einen Gewindebolzen aufweist, und bei dem ein Flansch (9) des Batterietrogs (1) mindestens einen Durchlass (15) für einen Gewindebolzen aufweist, wobei der mindestens eine Durchlass (15) ein Langloch ist, das sich in Einschubrichtung (x) des Batterietrogs (1) von einer äußeren Berandung des Flansches (9) erstreckt.

2. System nach Anspruch 1, bei dem die Formschlussaufnahme (4) einen lösbar oder fest mit der Trogaufnahme (2) verbundenen Clip (6) mit einem Hinterschnitt (7) aufweist, wobei der Hinterschnitt (7) beabstandet von der Auflageseite (3) angeordnet ist, so dass zwischen dem Hinterschnitt (7) und der Auflageseite (3) ein Freiraum (8) für die formschlüssige Aufnahme des Batterietrogs (1), insbesondere eines diesen berandenden Flansches (9), gebildet ist, und wobei der Freiraum (8) in Richtung des Befestigungsmittels (5) geöffnet ist.

3. System nach Anspruch 2, bei dem der Hinterschnitt (7) eine Vorspannung in Richtung Auflageseite (3) aufweist.

4. System nach Anspruche 3, bei dem der Clip (6) von einer elastischen Spange gebildet ist, wobei an den Hinterschnitt (7) ein Betätigungshebel (10) angeformt ist, so dass der Hinterschnitt (7) entgegen der Vorspannung verstellbar ist.

5. System nach einem der Ansprüche 2 bis 4, bei dem der Clip (6) einen Anschlag (11) aufweist, der eine Einschubbewegung des Batterietrogs (1) begrenzt.

6. System nach Anspruch 5, bei dem der Freiraum (8) für die formschlüssige Aufnahme eines den Batterietrog (1) berandenden Flansches (9) ausgebildet ist, wobei der Anschlag (11) in Einschubrichtung (x) dem Freiraum (8) vorgelagert ist, und wobei der Flansch (9) einen sich in Einschubrichtung (x) erstreckende Ausnehmung (12) aufweist, in dem der Anschlag (11) geführt ist.

7. System nach Anspruch 6, bei dem sich die Ausnehmung (12) zwischen einer äußeren Berandung des Flansches (9) und einem Wandelement (13) des Batterietrogs (1) erstreckt, wobei Anschlag (11) in der Ausnehmung (12) formschlüssig geführt ist, so dass der Batterietrog in der Ebene der Auflageseite (3) senkrecht zur Einschubrichtung festgelegt ist.

8. System nach einem der vorangegangenen Ansprüche, bei dem die Gewindeaufnahme eine Schweißmutter (14) ist.

9. System nach einem der vorangegangenen Ansprüche, bei dem die Trogaufnahme (2) einstückig ausgebildet ist und ein erstes Ende, an dem die Formschlussaufnahme (4) angeordnet ist, und ein dem ersten Ende gegenüber liegenden zweiten Ende, an dem das Befestigungsmittel (5) angeordnet ist, aufweist.

10. System nach einem Ansprüche 1 bis 8, bei dem die Trogaufnahme (2) zwei Montageschienen aufweist, wobei eine der Montageschienen die Formschlussaufnahme (4) und einen ersten Abschnitt der Auflageseite (3) aufweist, und wobei die andere der Montageschienen das Befestigungsmittel (5) und einen zweiten Abschnitt der Auflageseite (3) aufweist.

11. System nach Anspruch 10, bei dem die Montageschienen Gleichteile sind und in abwechselnder Abfolge mindestens eine Formschlussaufnahme (4) und mindestens ein Befestigungsmittel (5) aufweisen.

## Claims

1. A system consisting of at least one battery tray (1) and at least one tray holder (2) for the installation of the at least one battery tray (1) in a battery box (19), especially in a wind power system, whereby the tray holder (2) has a contact side (3) via which the battery tray (1) can be placed on the tray holder (2), whereby the tray holder (2) has a positive-fit holder (4), whereby the battery tray (1) is placed in an installation position on the contact side (3) when it is secured with a positive-fit in the positive-fit holder (4) via a first side, whereby the tray holder (2) has a fastening means (5) at a distance from the positive-fit holder (4) to allow the connection of a second side of the battery tray (1), and whereby the second side of the battery tray (1) is pre-aligned relative to the fastening means (5) when the battery tray (1) is in the installation position,
**characterized in that**
the positive-fit holder (4) and the battery tray (1) have corresponding fastening means that allow a non-positive connection of the battery tray (1) to the tray holder (2), whereby the corresponding means are flush when the battery tray (1) is in the installation position, whereby the positive-fit holder (4) has at least one threaded receptacle or a threaded bolt, and wherein a flange (9) of the battery tray (1) has at least one cutout (15) for a threaded bolt, whereby the at least one cutout (15) is a slot that extends away from an outer border of the flange (9) in the insertion direction (x) of the battery tray (1).

2. The system according to claim 1, wherein the positive-fit holder (4) has a clip (6) that is detachably or permanently connected to the tray holder (2) and that has an undercut (7), whereby the undercut (7) is arranged at a distance from the contact side (3), so that, between the undercut (7) and the contact side (3), there is a free space (8) to hold the battery tray (1) with a positive fit, especially to hold a flange (9) that borders the battery tray (1), and whereby the free space (8) is open in the direction of the fastening means (5).

3. The system according to claim 2, wherein the undercut (7) is pretensioned in the direction of the contact side (3).

4. The system according to claim 3, wherein the clip (6) is formed by a plastic bracket, whereby an actuation lever (10) is shaped onto the undercut (7), so that the undercut (7) can be moved against the pretension.

5. The system according to one of claims 2 to 4, wherein the clip (6) has a stop (11) that delimits the insertion movement of the battery tray (1).

6. The system according to claim 5, wherein the free space (8) is configured to hold with a positive fit a flange (9) that borders the battery tray (1), whereby the stop (11) is in front of the free space (8) in the insertion direction (x), and whereby the flange (9) has a recess (12) which extends in the insertion direction (x) and in which the stop (11) runs.

7. The system according to claim 6, wherein the recess (12) extends between an outer border of the flange (9) and a wall element (13) of the battery tray (1), whereby the stop (11) runs in the recess (12) with a positive fit in such a way that the battery tray is secured in the plane of the contact side (3) perpendicular to the insertion direction.

8. The system according to one of the preceding claims, wherein the threaded holder is a welding nut (14).

9. The system according to one of the preceding claims, wherein the tray holder (2) is configured in one piece, and it has a first end at which the positive-fit holder (4) is arranged and a second end - that is opposite from the first end - where the fastening means (5) is arranged.

10. The system according to one of claims 1 to 8, wherein the tray holder (2) has two assembly rails, whereby one of the assembly rails has the positive-fit holder (4) and a first section of the contact side (3), and whereby the other assembly rail has the fastening means (5) and a second section of the contact side (3).

11. The system according to claim 10, wherein the assembly rails are identical parts and they have at least one positive-fit holder (4) and at least one fastening means (5) in an alternating sequence.

## Revendications

1. Système composé d'au moins une cuve de batterie (1) et d'au moins un logement de cuve (2) pour le montage de l'au moins une cuve de batterie (1) dans un compartiment de batterie (19), en particulier d'une installation à énergie éolienne, le logement de cuve (2) présentant un côté d'appui (3) via lequel la cuve de batterie (1) peut être posée sur le logement de cuve (2), le logement de cuve (2) présentant un logement à engagement par coopération de forme (4), la cuve de batterie (1) étant posée dans une position de montage sur le côté d'appui (3) lorsqu'elle est logée, via un premier côté, par complémentarité de forme dans le logement à engagement par coopération de forme (4), le logement de cuve (2) présentant, à distance du logement à engagement par coopération de forme (4), un moyen de fixation (5) pour une liaison d'un deuxième côté de la cuve de batterie (1), et le deuxième côté de la cuve de batterie (1) étant préaligné par rapport au moyen de fixation (5) lorsque la cuve de batterie (1) se trouve dans la position de montage,
**caractérisé en ce que**
le logement à engagement par coopération de forme (4) et la cuve de batterie (1) présentent des moyens de fixation correspondants pour une liaison par force de la cuve de batterie (1) au logement de cuve (2), les moyens correspondants étant en alignement lorsque la cuve de batterie (1) se trouve dans la position de montage, le logement à engagement par coopération de forme (4) présentant au moins un logement fileté ou un goujon fileté, et selon lequel un rebord (9) de la cuve de batterie (1) comporte au moins un passage (15) pour un goujon fileté, l'au moins un passage (15) étant un trou oblong qui s'étend dans la direction d'insertion (x) de la cuve de batterie (1) depuis une bordure extérieure du rebord (9).

2. Système selon la revendication 1, selon lequel le logement à engagement par coopération de forme (4) présente un clip (6) avec une partie en retrait (7), lequel est détachable ou solidaire du logement de cuve (2), la partie en retrait (7) étant agencée à distance du côté d'appui (3), de sorte qu'est formé, entre la partie en retrait (7) et le côté d'appui (3), un espace libre (8) pour loger par complémentarité de forme la cuve de batterie (1), et plus particulièrement un rebord (9) de celle-ci, l'espace libre (8) étant ouvert en direction du moyen de fixation (5).

3. Système selon la revendication 2, selon lequel la partie en retrait (7) présente une précontrainte en direction du côté d'appui (3).

4. Système selon la revendication 3, selon lequel le clip (6) est formé par une agrafe élastique, un levier d'actionnement (10) étant surmoulé sur la partie en retrait (7), de sorte que la partie en retrait (7) peut être déplacée à l'encontre de la précontrainte.

5. Système selon l'une des revendications 2 à 4, selon lequel le clip (6) présente une butée (11) qui limite un mouvement d'insertion de la cuve de batterie (1).

6. Système selon la revendication 5, selon lequel l'espace libre (8) est formé pour loger par complémentarité de forme un rebord (9) de la cuve de batterie (1), la butée (11) étant située en amont de l'espace libre (8) dans le sens d'insertion (x) et le rebord (9) présentant un évidement (12) qui s'étend dans la direction d'insertion (x) et dans lequel est guidée la butée (11).

7. Système selon la revendication 6, selon lequel l'évidement (12) s'étend entre une bordure extérieure du rebord (9) et un élément de paroi (13) de la cuve de batterie (1), la butée (11) étant guidée par complémentarité de forme dans l'évidement (12), de sorte que la cuve de batterie est fixée verticalement par rapport à la direction d'insertion dans le plan du côté d'appui (3).

8. Système selon l'une des revendications précédentes, selon lequel le logement fileté est un écrou à souder (14).

9. Système selon l'une des revendications précédentes, selon lequel le logement de cuve (2) est réalisé d'une seule pièce et présente une première extrémité à laquelle se situe le logement à engagement par coopération de forme (4) et une deuxième extrémité située vis-à-vis de la première extrémité et à laquelle se situe le moyen de fixation (5).

10. Système selon l'une des revendications 1 à 8, selon lequel le logement de cuve (2) comporte deux rails de montage, l'un des rails de montage présentant le logement à engagement par coopération de forme (4) et une première partie du côté d'appui (3) et l'autre rail de montage présentant le moyen de fixation (5) et une deuxième partie du côté d'appui (3).

11. Système selon la revendication 10, selon lequel les rails de montage sont des pièces identiques et présentent en alternance au moins un logement à engagement par coopération de forme (4) et au moins un moyen de fixation (5).
